# EUROPÄISCHE PATENTSCHRIFT

(11) **EP 0 454 990 B1**
(45) Veröffentlichungstag und Bekanntmachung des Hinweises auf die Patenterteilung: **29.09.1993**
(21) Anmeldenummer: 91104500.3
(22) Anmeldetag: 22.03.1991
(51) Int. Cl.: B62D 1/19, B60R 21/00, B60R 21/16, B60R 22/00

(54) **Sicherheitseinrichtung**
Safety device
Dispositif de sécurité

(30) Priorität: 28.04.1990 DE 4013695
(43) Veröffentlichungstag der Anmeldung: 06.11.1991
(73) Patentinhaber: AUDI AG, 85045 Ingolstadt (DE)
(72) Erfinder:
(74) Vertreter: Engelhardt, Harald

(56) Entgegenhaltungen:
- EP-A- 0 199 024
- DE-C- 3 801 109

## Beschreibung

Die Erfindung betrifft eine Sicherheitseinrichtung für ein mit einem Lenkrad ausgerüstetes Kraftfahrzeug nach dem Oberbegriff des Anspruchs 1.

Bei einer bekannten Sicherheitseinrichtung DE-PS 38 01 109 enthält eine gattungsgemäße Sicherheitseinrichtung ein Seil, mit dem bei einem Frontalaufprall das Lenkrad aus dem möglichen Kopfaufschlagbereich des Fahrzeugführers wegbewegt werden kann. Dazu ist das lenkradseitige Seilende mit einem Seilnippel versehen, der an einer an der Lenksäulenlagerschale angebrachten Aufnahme zur Seil-Zugkraftübertragung über eine Stützvorrichtung abgestützt ist. Diese Stützvorrichtung ist über eine Steuereinrichtung lösbar ausgeführt. Weiter ist das Kraftfahrzeug mit einem Sicherheitsgurt für den Fahrzeugführer ausgerüstet und die Steuereinrichtung so ausgelegt, daß die Sicherheitseinrichtung nur bei angelegtem Gurt auf das Lenkrad einwirkt.

Die lösbare Stützvorrichtung besteht aus einem in den Seilweg einfahrbaren Sperrglied als Anschlag für den Seilnippel. Das Sperrglied wird über die Steuereinrichtung und ein Stellglied bei angelegtem Gurt in den Seilweg eingefahren und bei nicht angelegtem Gurt aus dem Seilweg herausgefahren. Dies hat zur Folge, daß bei einem Aufprall bei nicht angelegtem Sicherheitsgurt das Lenkrad nicht weggezogen und in einer fahrernäheren Position verbleibt. Während bei einem Aufprall mit angelegtem Sicherheitsgurt ein aus dem möglichen Kopfaufschlagbereich wegbewegtes Lenkrad vorteilhaft ist, kann es sicherheitstechnisch günstiger sein, wenn bei nicht angelegtem Gurt das Lenkrad in der ursprünglichen, fahrernäheren Position verbleibt.

Dies wird bei dem reversiblen System nach dem Stand der Technik dadurch erreicht, daß jedesmal, wenn der Fahrzeugführer seinen Sicherheitsgurt anlegt, über ein Stellglied das Sperrglied in den Seilweg eingefahren wird und beim Lösen des Sicherheitsgurts das Sperrglied aus dem Seilweg wieder herausgefahren wird. Ersichtlich ist eine solche Einrichtung relativ aufwendig.

Es ist weiter bekannt, ein Fahrzeug mit einem vor dem Fahrzeugführer aufblasbaren Gaskissen auszurüsten, das bei einem Frontalaufprall als Aufprallschutz wirkt. Der Aufblasvorgang wird von einem, bei einem Aufprall ansprechenden Gaskissen-Sensor, ausgelöst, wodurch eine pyrotechnische Ladung gezündet wird.

In bestimmten Ländern sind passive Systeme, z.B. aufblasbare Gaskissen, als Aufprallschutz gesetzlich vorgeschrieben. Eine Anschnallpflicht mit den im Fahrzeug enthaltenen Sicherheitsgurten besteht nicht in jedem Fall. Der Fahrzeugführer kann sich somit entweder auf den Schutz des Gaskissens ohne Sicherheitsgurt verlassen (erste Variante, passiv) oder zusätzlich mit angelegtem Sicherheitsgurt fahren (zweite Variante, aktiv).

Bei der ersten Variante ist es sicherheitstechnisch vorteilhaft, das Lenkrad in "guter Nähe" zum Fahrzeugführer bei einem Aufprall zu belassen. Damit wird die Aufprallgeschwindigkeit des Fahrzeugführers auf das sich vor dem Lenkrad aufblasende Luftkissen entsprechend klein.

Bei der zweiten Variante ist es vorteilhaft, das Lenkrad gemäß der oben beschriebenen Sicherheitseinrichtung nach vorne mit Hilfe des Seils wegzuziehen. Damit läßt sich die Belastung für den Fahrzeugführer bei einem Aufprall reduzieren; insbesondere werden verletzungsträchtige Bewegungsabläufe zwischen Insasse und Rückhaltesystem praktisch ausgeschlossen.

Aufgabe der Erfindung ist es demgegenüber, eine gattungsgemäße Sicherheitseinrichtung so weiterzubilden, daß mit einer einfachen und kostengünstigen Maßnahme das Lenkrad bei einem Fahrzeug mit eingebautem Gaskissen im Falle eines Frontalaufpralls bei angelegtem Gurt nach vorne weggezogen wird und bei nicht angelegtem Gurt in seiner Position verbleibt.

Diese Aufgabe wird mit den Merkmalen des Anspruchs 1 gelöst.

Gemäß Anspruch 1 ist an der Stützvorrichtung, die den Seilnippel in Seilzugrichtung abstützt und somit die Zugverbindung zum Lenkrad bzw. der Lenksäule schafft, eine pyrotechnische Sprengkapsel mit Zündeinrichtung angebracht. Nach Auslösen dieser Sprengkapsel wird die Stützvorrichtung so verändert, daß das lenkradseitige Seilende bzw. der Seilnippel lösbar ist und ohne das Lenkrad wegzuziehen, frei bewegbar ist. Eine Zündung der Sprengkapsel erfolgt bei einem Aufprall über den ansprechenden Gaskissen-Sensor und nur bei nicht angelegtem Sicherheitsgurt. Dies ist möglich, da der Gaskissen-Sensor zeitlich immer früher anspricht als die Sicherheitseinrichtung mit dem Seil und somit auch die Sprengkapsel an der Stützvorrichtung ausgelöst wird, bevor ein Zug auf das Seil ausgeübt wird. Damit wird vor Ansprechen der Sicherheitseinrichtung der gewünschte Zustand entsprechend der Variante 1 oder 2 hergestellt.

Im Vergleich zu dem reversiblen Prinzip der Seilausklinkung nach dem Stand der Technik, das aufwendig ist und einen großen Bauraum erfordert, handelt es sich erfindungsgemäß um ein Einmal-Prinzip in Verbindung mit einem Gaskissen, das nur wenig aufwendig ist und einen kleinen Bauraum erfordert.

Mit Anspruch 2 wird die Steuereinrichtung beansprucht, die eine UND-Schaltung enthält. Der erste Eingang dieser UND-Schaltung ist mit einem am Gurtschloß des Sicherheitsgurts angeordneten Sensor verbunden, der bei nicht angelegtem Sicherheitsgurt ein entsprechendes Signal abgibt. Der zweite Eingang der UND-Schaltung ist mit dem Gaskissen-Sensor verbunden, der beim Auslösen des Gaskissens ein Signal abgibt. Der Ausgang der UND-Schaltung, der bei anliegenden Signalen an den beiden Eingängen ein Ausgangssignal abgibt, ist mit der Zündeinrichtung der pyrotechnischen Sprengkapsel verbunden, so daß diese bei nicht angelegtem Sicherheitsgurt und beim Ansprechen des Gaskissen-Sensors gezündet wird. Bauteilkosten und Schaltungsaufwand sind nur gering.

Nach Anspruch 3 ist ein an sich bekanntes Sperrglied beansprucht, das als Stützvorrichtung und Anschlag in Seilzugrichtung für den Seilnippel in die als zylindrische Bohrung ausgeführte Aufnahme für das lenkradseitige Seilende eingesteckt ist. Erfindungsgemäß ist an diesem Sperrglied die pyrotechnische Sprengkapsel angebracht, mit der das Sperrglied aus der Aufnahme bzw. aus dem Seilweg zum Ausklinken des Seiles herausgesprengt bzw. herausgeschossen wird, so daß dann das Seilende lose und frei aus der Aufnahme herausgezogen werden kann.

Das Sperrglied ist nach Anspruch 4 vorteilhaft als U-förmiges Blechteil ausgebildet, das in einen quer zur zylindrischen Bohrung der Aufnahme verlaufenden, durchgehenden Schlitz eingesteckt und dort gehalten ist. Die beiden U-Schenkel liegen soweit auseinander, daß sie das Seil umfassen und den Seilnippel abstützen. Die pyrotechnische Sprengkapsel ist im Bereich wenigstens eines U-Schenkels angeordnet und schießt beim Ansprechen das Sperrglied aus dem Schlitz heraus. Eine solche Vorrichtung kann relativ einfach wieder geladen werden, indem ein neues Sperrglied und eine neue pyrotechnische Sprengkapsel eingesetzt werden.

Mit Anspruch 5 wird eine weitere Ausführungsform beansprucht, bei der sich der Seilnippel innerhalb der Aufnahme an einer als Stützvorrichtung ausgebildeten Verengung abstützt. Hier ist im Bereich des Stützmaterials die Sprengkapsel angebracht, womit Stützmaterial zur Freigabe des Seilwegs absprengbar ist. Diese Ausführung ist mit sehr geringem Aufwand realisierbar. Es wird dabei davon ausgegangen, daß bei einem so schweren Frontalaufprall, bei dem das Gaskissen anspricht, ohnehin viele Fahrzeugteile zerstört oder beschädigt werden, so daß eine umfangreiche Fahrzeugreparatur in jedem Fall erforderlich sein wird. Bei einer solchen, großen Reparatur kann auch die zerstörte Aufnahme für das Seilende ausgetauscht werden, wobei die Kosten dafür relativ gering sind.

Nach Anspruch 6 ist es vorteilhaft und besonders einfach, die Sprengkapsel in einer Bohrung im Stützmaterial anzuordnen.

Anhand einer Zeichnung werden zwei Ausführungsbeispiele der Erfindung mit weiteren Merkmalen, Einzelheiten und Vorteilen näher erläutert.

Es zeigen
- Fig. 1: eine Seitenansicht eines Schnitts durch ein Kraftfahrzeug zur Verdeutlichung der prinzipiellen Wirkungsweise der Sicherheitseinrichtung,
- Fig. 2: einen Querschnitt durch eine Lenksäulenlagerschale mit einer Aufnahme für einen Seilnippel und ein Sperrglied einer ersten Ausführungsform,
- Fig. 3: einen Längsschnitt durch die Anordnung nach Fig. 2,
- Fig. 4: einen Längsschnitt durch eine Lenksäulenlagerschale mit einer Aufnahme für einen Seilnippel einer zweiten Ausführungsform.

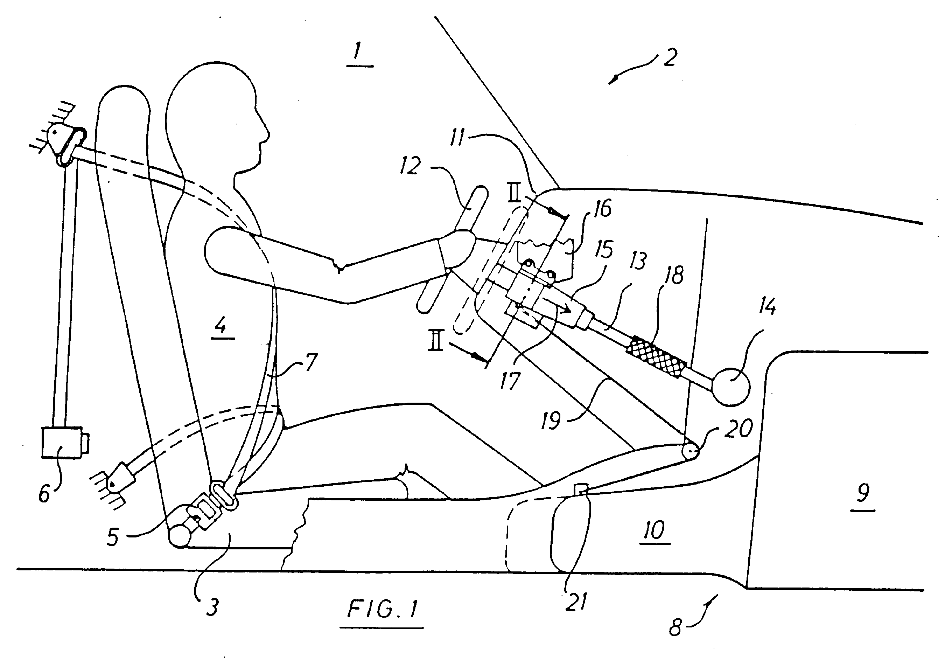

Fig. 1 zeigt in einer schematischen Darstellung den vorderen Innenraum 1 eines Kraftfahrzeugs 2. Auf dem Fahrersitz 3 ist der Fahrzeugführer 4 mittels eines bekannten, im wesentlichen aus Gurtschloß 5, Aufwickelvorrichtung 6 und Sicherheitsgurt 7 bestehenden Sicherheitsgurtsystems gesichert.

Ein Antriebsaggregat 8 befindet sich im vorderen Bereich des Kraftfahrzeugs 2 und besteht aus einem längs eingebauten Motor 9, an den sich nach hinten ein Getriebe 10 anschließt.

In der Nähe einer Armaturentafel 11 ist ein Lenkrad 12 angeordnet, welches über eine Lenksäule 13 mit einem Lenkgetriebe 14 in Wirkverbindung steht.

Die Lenksäule 13 ist in einer Lenksäulenlagerschale 15 drehbar gelagert, während in axialer Richtung keine Relativbewegung möglich ist. Die Lenksäulenlagerschale 15 ist an einem Querträger 16 im Bereich der Armaturentafel 11 befestigt. Über entsprechende Verbindungselemente ist sichergestellt, daß sich die Lenksäulenlagerschale 15 zusammen mit der Lenksäule 13 nur beim Eintritt eines Frontalaufpralls in Axialrichtung (Pfeil 17) verschiebt, so daß danach das Lenkrad 11 die gestrichelte Position einnimmt.

Um eine solche axiale Verschiebung zu ermöglichen, weist die Lenksäule 13 einen Abschnitt auf, welcher aus einem verformbaren Gitterrohr 18 besteht. An der Lenksäulenlagerschale 15 ist ein Seil 19 befestigt, welches zu einer Umlenkrolle 20 und weiter zu einer Befestigungsstelle 21 am Getriebe 10 führt.

Bei einem starken Frontalaufprall, der zu einer Verformung des vorderen Bereichs des Kraftfahrzeugs 2 führt, wird das Antriebsaggregat 8 nach hinten bewegt und nimmt die gestrichelte Position ein. Diese Relativverschiebung wird durch das am Getriebe 10 befestigte Seil 19 auf die Lenksäulenlagerschale 15 übertragen, wodurch das Lenkrad 12 in die strichlierte Position nach vorne weggezogen wird.

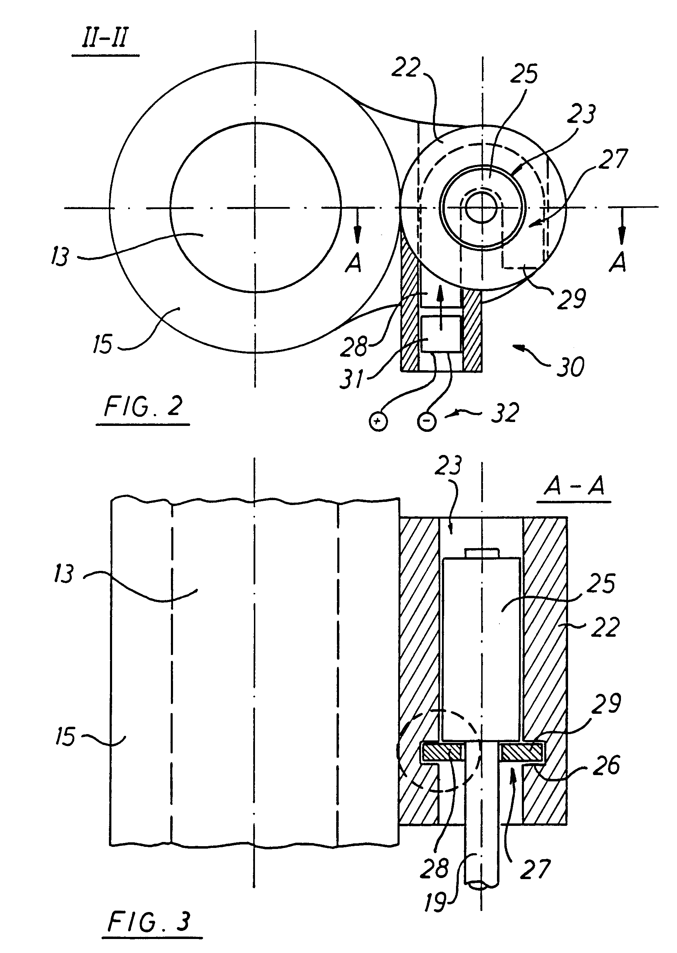

Die Anbindung des Seils 19 erfolgt über die erfindungsgemäße Anordnung nach den Fig. 2 bis 4, wobei die Fig. 2 den Schnitt II-II aus Fig. 1 darstellt.

In der ersten Ausführungsform nach den Fig. 2 und 3 ist die Lenksäule 13 in der Lenksäulenlagerschale 15 drehbar gehalten. An der Lenksäulenlagerschale 15 ist seitlich eine Aufnahme 22 mit einer zylindrischen Bohrung 23 angebracht. In die Bohrung 23 ist ein Seil 19 mit einem im Durchmesser größeren und der zylindrischen Bohrung 23 entsprechenden Seilnippel 25 eingeführt. In einen durchgehenden Schlitz 26 ist ein Sperrglied als U-förmiges Blechteil 27 eingesteckt. Die beiden U-Schenkel 28, 29 umfassen das Seil 19 und stützen den Seilnippel 25 in Seilzugrichtung ab.

Am U-Schenkel 28 ist eine Ausschußeinrichtung 30 angeordnet, in der eine pyrotechnische Sprengkapsel 31 mit der erforderlichen Zündeinrichtung enthalten ist. Schematisch sind die Anschlußdrähte 32 zur Zündeinrichtung dargestellt.

Die dargestellte Anordnung hat folgende Funktion: Bei einem starken Frontalaufprall, bei dem ein (nicht dargestelltes) Gaskissen durch einen Gaskissen-Sensor aktiviert wird, bleibt bei angelegtem Sicherheitsgurt das Sperrglied bzw. das U-förmige Blechteil 27 in seiner dargestellten Position, so daß die Sicherheitseinrichtung wirksam ist und das Lenkrad 12 in die in Fig. 1 strichlierte Position nach vorne weggezogen wird. Wenn der Sicherheitsgurt nicht angelegt ist, wird zugleich mit der Auslösung des Gaskissen-Sensors die Sprengkapsel 31 gezündet und das Sperrglied 27 aus dem Schlitz 26 herausgeschossen. Dadurch kann sich das Seil 19 mit dem Seilnippel 25 frei aus der Aufnahme 22 herausbewegen, wodurch die Sicherheitseinrichtung wirkungslos ist und das Lenkrad 12 in der in Fig. 1 durchgehend gezeichneten Position verbleibt.

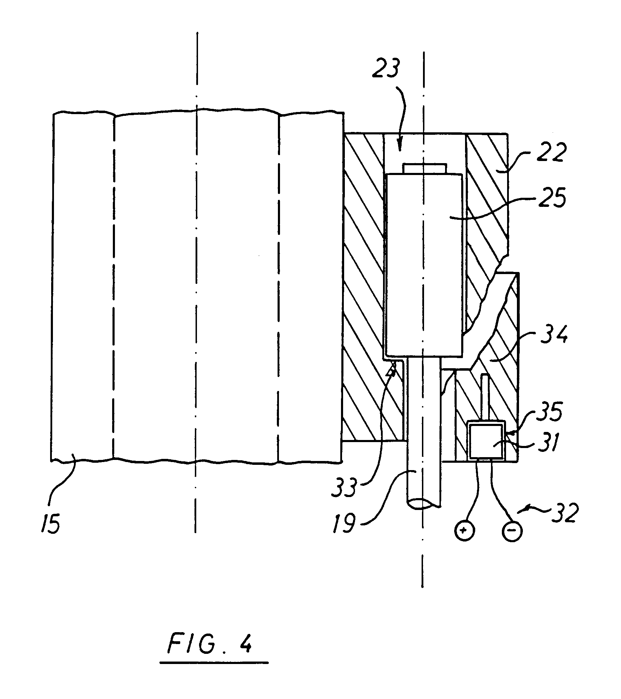

In Fig. 4 ist eine zweite Ausführungsform für eine Ankopplung des Seils 19 an die Lenksäulenlagerschale 15 dargestellt. Auch hier ist eine mit der Lenksäulenlagerschale 15 fest verbundene Aufnahme 22 vorgesehen, mit einer zylindrischen Bohrung 23 im Durchmesser des Seilnippels 25. In Seilzugrichtung ist jedoch eine Verengung 33 enthalten, wo durch Stützmaterial 34 der Seilnippel 25 abgestützt ist.

In einer Bohrung 35 im Stützmaterial 34 ist wiederum eine Sprengkapsel 31 mit Zündeinrichtung und Anschlußdrähten 32 angeordnet.

Unter den vorbeschriebenen Bedingungen wird auch hier die Sprengkapsel 31 gezündet und dadurch das Stützmaterial 34 weggesprengt. Auch damit wird der Weg für das Seil 19 bzw. den Seilnippel 25 durch die Aufnahme 22 frei und die Sicherheitseinrichtung bei nicht angelegtem Gurt wirkungslos gemacht.

## Patentansprüche

1. Sicherheitseinrichtung für ein mit einem Lenkrad ausgerüstetes Kraftfahrzeug,
wobei das Lenkrad (12) mit einer in einer Lenksäulen-Lagerschale (15) gelagerten Lenksäule (13) verbunden ist,
die Sicherheitseinrichtung ein Seil (19) enthält, dessen lenkradseitiges Seilende einen Seilnippel (25) aufweist, der in einer an der Lenksäulen-Lagerschale angeordneten Aufnahme (22) zur Seil-Zugkraftübertragung über eine Stützvorrichtung abstützbar ist und bei abgestützter Seil-Zugkraft das Lenkrad (12) aus dem möglichen Kopfaufschlagbereich des Fahrzeugführers wegbewegbar ist und die Stützvorrichtung über eine Steuereinrichtung lösbar ist,
das Kraftfahrzeug weiter mit einem Sicherheitsgurt (7) für den Kraftfahrzeugführer ausgerüstet ist und die Steuereinrichtung so ausgelegt ist, daß die Sicherheitseinrichtung nur bei angelegtem Sicherheitsgurt auf das Lenkrad einwirkt,
dadurch gekennzeichnet,
daß das Fahrzeug (2) weiter mit einem vor dem Fahrzeugführer (4) bei einem Aufprall als Aufprallschutz wirkenden, über eine pyrotechnische Ladung aufblasbaren Gaskissen ausgerüstet ist und
der Aufblasvorgang von einem bei einem Aufprall ansprechenden Gaskissen-Sensor ausgelöst wird,
daß an der Stützvorrichtung (Sperrglied 27; Stützmaterial 34) eine pyrotechnische Sprengkapsel (31) mit Zündeinrichtung angebracht ist, nach deren Auslösung die Stützvorrichtung (Sperrglied 27; Stützmaterial 34) für den Seilnippel (25) des lenkradseitigen Seilendes gelöst ist, wobei eine Zündung über die Steuereinrichtung beim Ansprechen des Gaskissen-Sensors und bei nicht angelegtem Sicherheitsgurt (7) erfolgt.

2. Sicherheitseinrichtung nach Anspruch 1, dadurch gekennzeichnet, daß die Steuereinrichtung eine UND-Schaltung enthält,
daß mit deren ersten Eingang ein am Gurtschloß (5) des Sicherheitsgurts (7) angeordneter Sensor verbunden ist, der bei nicht angelegtem Sicherheitsgurt (7) ein entsprechendes Signal abgibt,
daß mit deren zweiten Eingang der Gaskissen-Sensor verbunden ist, der beim Auslösen des Gaskissens ein entsprechendes Signal abgibt und
daß der Ausgang der UND-Schaltung mit der Zündeinrichtung der pyrotechnischen Sprengkapsel (31) verbunden ist und der bei nicht angelegtem Sicherheitsgurt (7) und beim Ansprechen des Gaskissen-Sensors ein Zündsignal abgibt.

3. Sicherheitseinrichtung nach Anspruch 1 oder 2, dadurch gekennzeichnet, daß in die als zylindrische Bohrung (23) ausgeführte Aufnahme (22) für das lenkradseitige Seilende bzw. den im Durchmesser größer als der Seildurchmesser ausgebildeten Seilnippel (25) ein Sperrglied (27) als Stützvorrichtung und Anschlag in Seilzugrichtung für den Seilnippel (25) eingesteckt ist und
daß das Sperrglied (27) mit Hilfe der pyrotechnischen Sprengkapsel (31) aus der Aufnahme (22) und dem Seilweg heraussprengbar bzw. ausschießbar ist, so daß dann das Seilende lose und frei aus der Aufnahme (22) herausziehbar ist.

4. Sicherheitseinrichtung nach Anspruch 3, dadurch gekennzeichnet, daß das Sperrglied ein U-förmiges Blechteil (27) ist, das in einen quer zur zylindrischen Bohrung (23) der Aufnahme (22) verlaufenden, durchgehenden Schlitz (26) eingesteckt und dort gehalten ist,
daß die beiden U-Schenkel (28, 29) so weit auseinander liegen, daß sie das Seil (19) in Zugrichtung vor dem Seilnippel (25) umfassen und sich der Seilnippel (25) an den inneren Rändern der U-Schenkel (28, 29) in Zugrichtung abstützt und
daß im Bereich wenigstens eines U-Schenkels (28) die pyrotechnische Sprengkapsel (31) in einer Ausschußeinrichtung (30) angebracht ist und damit das Sperrglied (27) in Richtung des U-Schenkels (28) aus dem Schlitz (26) und damit aus dem Seilweg herausschießbar ist.

5. Sicherheitseinrichtung nach Anspruch 1 oder 2, dadurch gekennzeichnet, daß die Aufnahme (22) für das lenkradseitige Seilende als zylindrische Bohrung (23) ausgeführt ist mit einem Durchmesser im Durchmesser des Seilnippels (25),
daß eine Verengung (33) als Stützvorrichtung in Seilzugrichtung angebracht ist, an deren Stützmaterial (34) der Seilnippel (25) abgestützt ist und durch die das Seil (19) geführt ist und
daß im Bereich des Stützmaterials (34) die Sprengkapsel (31) angebracht ist und damit Stützmaterial (34) zur Freigabe des Seilwegs absprengbar ist.

6. Sicherheitseinrichtung nach Anspruch 5, dadurch gekennzeichnet, daß die Sprengkapsel (31) in einer Bohrung (35) im Stützmaterial (34) angeordnet ist.

## Claims

1. Safety device for a motor vehicle equipped with a steering wheel,
wherein the steering wheel (12) is joined to a steering column (13) mounted in a steering-column bush (15),
the safety device contains a cable (19) of which the cable end nearest the steering wheel has a cable fitting (25) which can be supported in a locator (22) disposed on the steering-column bush for transmitting cable pulling force via a support unit and when the cable pulling force is supported the steering wheel (12) can be moved away out of the potential range of vehicle driver head impact and the support unit can be disconnected via a controller,
the motor vehicle is further equipped with a seat belt (7) for the motor vehicle driver and the controller is so designed that the safety device only acts on the steering wheel when the seat belt is fastened,
characterised in that
- the vehicle (2) is further equipped with a gas cushion which in the event of an impact operates as an impact protection in front of the vehicle driver (4) and can be inflated by means of a pyrotechnic charge, and
the inflating operation is triggered by a gas cushion sensor activated in response to an impact,
- mounted on the support unit (locking member 27; support material 34) is a pyrotechnic priming cap (31) with ignition device, following the activation of which the support unit (locking member 27; support material 34) for the cable fitting (25) on the cable end nearest the steering wheel is disconnected, with ignition taking place via the controller when the gas cushion sensor responds and the seat belt (7) is not fastened.

2. Safety device according to claim 1, characterised in that the controller contains an AND circuit,
- that linked to the first input of said circuit is a sensor disposed on the buckle (5) of the seat belt (7), which sensor emits a corresponding signal when the seat belt (7) is not fastened,
- that the gas cushion sensor is linked to the second input of said circuit and emits a corresponding signal when the gas cushion is triggered, and
- that the output of the AND circuit is linked to the ignition device of the pyrotechnic priming cap (31) and which when the seat belt (7) is not fastened and the gas cushion sensor responds emits an ignition signal.

3. Safety device according to claim 1 or 2, characterised in that into the locator (22), in the form of a cylindrical bore (23), provided for the cable end nearest the steering wheel, or rather the cable fitting (25) of larger diameter than the cable diameter, is pushed a locking member (27) to act as a support unit and stop in the direction of cable pull for the cable fitting (25), and
that the locking member (27) can be detonated or expelled from the locator (22) and the path of the cable with the help of the pyrotechnic priming cap (31), thereby enabling the cable end to then be loosely and freely withdrawn from the locator (22).

4. Safety device according to claim 3, characterised in that the locking member is a U-shaped sheet metal part (27) which is pushed into a continuous slot (26) extending transverse to the cylindrical bore (23) of the locator (22) and is therein held,
- that the two U-legs (28, 29) are so far apart that they embrace the cable (19) before the cable fitting (25) in the direction of pull and the cable fitting (25) rests on the inner edges of the U-legs (28, 29) in the direction of pull, and
- that in the region of at least one U-leg (28) the pyrotechnic priming cap (31) is mounted in an expelling device (30) and thus the locking member (27) can be shot out of the slot (26) and hence out of the path of the cable towards the U-leg (28).

5. Safety device according to claim 1 or 2, characterised in that the locator (22) for the cable end nearest the steering wheel is in the form of a cylindrical bore (23) with a diameter the diameter of the cable fitting (25),
- that a throat (33) is fitted as the support unit in the direction of cable pull, on the support material (34) of which rests the cable fitting (25) and through which the cable (19) passes, and
- that the priming cap (31) is mounted in the region of the support material (34) and support material (34) can thus be blasted away to clear the path of the cable.

6. Safety device according to claim 5, characterised in that the priming cap (31) is disposed in a bore (35) in the support material (34).

## Revendications

1. Dispositif de sécurité pour un véhicule automobile équipé d'un volant de direction, dans lequel
le volant de direction (12) est raccordé à une colonne de direction (13) montée dans une coquille de support de colonne de direction (15),
le dispositif de sécurité comprend un câble (19) dont l'extrémité du côté du volant de direction comporte un embout de cable (25) qui peut prendre appui, dans un logement (22) aménagé sur la coquille de support de colonne de direction, sur un dispositif d'appui pour la transmission d'une force de traction exercée sur le câble, le volant de direction (12) pouvant être éloigné de la zone où il risque d'être heurté par la tête du conducteur lorsqu'un appui est fourni à la force de traction exercée sur le câble, et le dispositif d'appui pouvant être supprimé au moyen d'un dispositif de commande,
le véhicule automobile est outre équipé d'une ceinture de sécurité (7) pour son conducteur et le dispositif de commande est agencé de sorte que le dispositif de sécurité n'agisse sur le volant de direction que lorsque la ceinture de sécurité est attachée,
caractérisé
en ce que le véhicule (2) est en outre équipé d'un coussin pneumatique gonflable au moyen d'une charge pyrotechnique, placé devant le conducteur (4) et servant de protection contre le choc en cas de collision, le processus de gonflage étant déclenché par un détecteur associé au coussin pneumatique, qui réagit en cas de collision,
et en ce qu'il est disposé, au niveau du dispositif d'appui (élément d'arrêt 27; matière d'appui 34), une capsule pyrotechnique détonante (31) avec son système d'allumage, à la suite du déclenchement de laquelle le dispositif d'appui (élément d'arrêt 27; matière d'appui 34) pour l'embout de câble (25) de l'extrémité du câble située du côté du volant est supprimé, l'allumage de cette capsule se produisant, au moyen du dispositif de commande, lorsque le détecteur du coussin pneumatique réagit et que la ceinture de sécurité n'est pas attachée.

2. Dispositif de sécurité selon la revendication 1, caractérisé en ce que le dispositif de commande contient un circuit ET,
en ce qu'à la première entrée de celui-ci est relié un détecteur qui est disposé sur le verrou (5) de la ceinture de sécurité (7) et qui émet un signal correspondant lorsque la ceinture de sécurité (7) n'est pas attachée,
en ce qu'à la seconde entrée du circuit ET est relié le détecteur du coussin pneumatique, qui émet un signal correspondant lorsque le coussin pneumatique de sécurité est déclenché, et
en ce que la sortie du circuit ET est reliée au système d'allumage de la capsule pyrotechnique détonante (31) et émet un signal d'allumage lorsque le ceinture de sécurité (7) n'est pas attachée et que le détecteur du coussin pneumatique réagit.

3. Dispositif de sécurité selon la revendication 1 ou 2, caractérisé en ce que dans le logement (22) qui est réalisé sous forme de forure cylindrique (23) et qui est destiné à recevoir l'extrémité du câble du côté du volant ou l'embout de câble (25) réalisé avec un diamètre plus grand que celui du câble, est inséré un élément d'arrêt (27) servant de dispositif d'appui et de butée pour l'embout de cable (25) dans la direction de la traction exercée sur le cable, et
en ce que l'élément d'arrêt (27) peut être détruit par explosion ou expulsé du logement (22) ou du trajet du câble au moyen de la capsule pyrotechnique détonante (31), de sorte que l'extrémité du câble puisse être alors extraite du logement (22), librement et sans obstacle.

4. Dispositif de sécurité selon la revendication 3, caractérisé en ce que l'élément d'arrêt est un morceau de tôle (27) en forme d'U qui est inséré dans une fente (26) s'étendant de part en part perpendiculairement à la forure cylindrique (23) du logement et qui y est retenu,
en ce que les deux branches (28, 29) de l'U sont écartées de sorte qu'elles entourent le cable (19) avant l'embout de câble (25) dans le sens de la traction, l'embout de câble (25) prenant appui, dans le sens de la traction, sur les bords internes des branches (28, 29) de l'U, et
en ce que la capsule pyrotechnique détonante (31) est disposée au niveau de l'une au moins (28) des branches de l'U dans un dispositif d'expulsion par explosion (30), l'élément d'arrêt (27) pouvant ainsi être expulsé, dans la direction de la branche (28) de l'U, hors de la fente (26) et par conséquent hors du trajet du câble.

5. Dispositif de sécurité selon la revendication 1 ou 2, caractérisé en ce que le logement (22) pour l'extrémité du câble du côté du volant est réalisé sous forme de forure cylindrique (23) dont le diamètre correspond à celui de l'embout de câble (25),
en ce qu'un resserrement (33) y est formé en tant que dispositif d'appui dans la direction de la traction exercée sur le câble, resserrement sur la matière d'appui (34) duquel l'embout de câble prend appui et par lequel le câble (19) est guidé, et
en ce que la capsule détonante (31) est disposée au niveau de la matière d'appui (34), ce qui fait que la matière d'appui (34) peut être détruite par l'explosion pour libérer le trajet du câble.

6. Dispositif de sécurité selon la revendication 5, caractérisé en ce que la capsule détonante (31) est disposée dans une forure (35) dans la matière d'appui (34).
